Europäisches Patentamt

(19) European Patent Office

Office européen des brevets

(11) Publication number: **0 087 067**
**B1**

(12) **EUROPEAN PATENT SPECIFICATION**

(45) Date of publication of patent specification: **15.10.86**

(21) Application number: **83101241.4**

(22) Date of filing: **09.02.83**

(51) Int. Cl.⁴: **B 01 D 46/10, F 01 N 3/02,**
**B 01 D 39/20, C 04 B 24/24**

(54) **Exhaust gas filter and method of making the same.**

(30) Priority: **16.02.82 JP 23839/82**
**21.06.82 JP 107209/82**
**21.06.82 JP 107210/82**
**21.06.82 JP 107211/82**
**21.06.82 JP 107212/82**

(43) Date of publication of application:
**31.08.83 Bulletin 83/35**

(45) Publication of the grant of the patent:
**15.10.86 Bulletin 86/42**

(84) Designated Contracting States:
**DE FR GB IT**

(56) References cited:
**EP-A-0 035 053**
**DE-A-1 761 592**
**FR-A-2 193 797**
**US-A-4 264 346**

(73) Proprietor: **Matsushita Electric Industrial Co., Ltd.**
**1006, Oaza Kadoma**
**Kadoma-shi Osaka-fu, 571 (JP)**

(72) Inventor: **Kusuda, Takao**
**7-32, Higashiyama-cho**
**Ashiya City, 659 (JP)**
Inventor: **Mihara, Toshihiro**
**18-2, Sugiyamate 1-chome**
**Hirakata City, 573-01 (JP)**
Inventor: **Yonemura, Masaaki**
**Shin-ohmiya Haitaun E-410,300-7 Daianji-cho**
**Nara City 630 (JP)**
Inventor: **Kuwano, Satoshi**
**1-54, Suimeidai 3-chome**
**Kawanishi City, 666-01 (JP)**

(74) Representative: **Kuhnen, Wacker & Partner**
**Schneggstrasse 3-5 Postfach 1729**
**D-8050 Freising (DE)**

Courier Press, Leamington Spa, England.

# Description

## Background of the invention

### 1. Field of the invention

The present invention relates generally to the art of preventing environmental pollution attributable to exhaust gas of internal combustion engines or the like.

Particularly, the present invention concerns an improvement in the exhaust gas filter for removing particulates such as soot, which is inevitably contained in the exhaust gas of diesel engine.

### 2. Description of prior art

Particulates such as soot contained in the exhaust gas of diesel engine have recently been reported to be carcinogenic and it is therefore desirable to eliminate such particulates from exhaust gases. Although improvements of combustors and engines as such are being made to reduce emissions of such particulates, for the present time it is considered best to prevent the environmental pollution by trapping the particulates by a filter and then burn the particulate-carrying filter to oxidize the particulates into carbon dioxide. And a variety of concrete ways have been proposed for accomplishing the above-mentioned object.

The known proposals include, for instance, use of metal mesh or ceramic fiber packed and sealed in a container, and that of a porous ceramic foam or a monolithic ceramic honeycomb structure. An apparatus having a container wherein the metal mesh or ceramic fiber is randomly filled as filter element is not suited for the purpose, because the filter may frequently offset during the service to create channels of two large size for the particulates-containing exhaust gas and result a blowoff phenomenon for the soot or an attrition phenomenon of the fiber. The metal mesh may encounter a problem of melting down during a process for regenerating the filtering function wherein the trapped particulates should be burnt. The ceramic foam and monolithic ceramic structured body have insufficient heat shock resistant property to be liable to making cracks during the regeneration process. Particularly, the monolithic ceramic structural body has another drawback that it has an insufficient gas permeability which amounts to a large pressure drop, because it cannot be structured to have a large porosity.

A generic exhaust gas filter for filtering particulates is for example known from EP—A—35 053. This known filter comprises a row of a plural number of channels and blockade walls provided to close alternate ends of said channels, thereby to close one end of each channel.

The main disadvantage of this known filter, however, is that this catalytic filter is made of a metal filter, which is basically not able to be used at temperatures above 1000°C.

## Summary of the invention

It is therefore an object of the present invention to provide an exhaust gas filter which can almost completely obviate the drawbacks inherent to known filters and which may be applied in a wide range of temperatures including temperatures above 1000°C.

The solution of this object is achieved by the characterizing features of claim 1.

It has been found that the advantageous properties of the ceramic filter according to the invention are achieved with a composite of ceramic filter and clay, especially in the range of 40 wt.% to 96 wt.% of heat resistant ceramic fiber.

Although a porous ceramic filter is known from US—A—4 264 346, in which high-temperature ceramic fibers extend into the passage, the ceramic fibers of this known filter are used as just hair-like preventive on the surface of the passage.

In the present invention, however, ceramic fibers are used as a material of porous ceramic composite. Ceramic fibers compose porous ceramic material itself. Therefore, filtration of particles from exhaust gas is done by flowing-through the porous ceramic composite, not by trapping by fibers on the surface of the passage. For these reasons US—A—4 264 364 teaches a completely different type of filter which cannot be compared with the filter according to the invention.

Furthermore, from FR—A—2 193 797 a porous ceramic element is known, but not ceramic-fiber composites. In the process of making porous ceramic material of this reference, organic fiber is used to make ceramic paper, but ceramic fibers are not adapted. Therefore, FR—A—2 193 797 does not teach any properties and/or process of making ceramic fiber composites. Furthermore, FR—A—2 193 797 fails to disclose any properties of a filter of particulates from Diesel engine.

The invention itself, as to its objects and advantages, and the manner in which it may be carried out, may be better understood by reference to the following detailed description taken in connection with the accompanying drawings.

## Brief explanation of the drawing

Figure 1 is a general perspective view of an example of exhaust gas filter embodying the present invention.

Figure 2 is a partially enlarged view showing detail of the blockade walls of the example of Figure 1, with the plane sheets 1a, 1a separated from the corrugated sheet 4a for illustration.

Figure 3 is a general perspective view of another example of exhaust gas filter embodying the present invention.

Figure 4 is a partially enlarged view showing detail of the front part of the example of Figure 3.

Figure 5 is a perspective view of detail of blockade walls of another example.

Figure 6 is a graph showing a characteristic (increasing rate of pressure drop) of the filter of the present invention.

Figure 7 is a graph showing another characteristic (bulk density vs. particulate collection efficiency) of the filter of the present invention.

Figure 8 is a graph showing another characteristic (bulk density vs. pressure drop) of the filter of the present invention.

Description of the preferred embodiments

The exhaust gas filter in accordance with the present invention comprises a number of channels defined by partitions made of sintered ceramic fiber composite sheets, which is made of ceramic fiber such as alumina fiber, alumina-silica fiber or silica fiber and a fire clay. The filter is formed in a honeycomb configuration which has a number of the channels defined by the sheets as partitions, and the end parts of the channels are alternately closed, forming blockade wall alternately at either end of the channel. The channels are formed by stacking and bonding the corrugated sheets of the sintered ceramic fiber composite and plane sheet of the sintered ceramic fiber composite in alternate order. The channels are disposed between an inlet side and an outlet side of a known exhaust gas filter container. The exhaust gas flows into inflow channels having open ends at the inlet side and passes through the partitions encircling the channels. Then, the exhaust gas which come into neighboring withdrawing channels flows down to the open ends of the neighboring channels and released out of the open ends at the outlet side. The novel honeycomb structure in accordance with the present invention has a large total surface area of the partition of the channel, and accordingly, the exhaust gas passing through the partitions produces only small pressure drop. The particulates in the exhaust gas are effectively trapped by a great number of minute pores formed on wide total surface area of the partition.

The honeycomb structure of filter in accordance with the present invention, as well as, making method utilizing common method of paper making provides an exhaust gas filter that has sufficient heat resistivity against regeneration work of burning the trapped particulates and tarry substance.

The sintered ceramic fiber composite sheet of the exhaust gas filter in accordance with the present invention is made generally in the following process.

Firstly, ceramic fiber (mean diameter: 2 μm), for instance, alumina-silica fiber or silica fiber is cut by chopper into short yarns of predetermined lengths, for instance, 0.1—10 mm. Then, the chopped fibers are dispersed in water. Then, powder clay prepared by blending a silica-alumina clay such as ball clay, china clay, or the like and coarse particles, such as petalite or spodumene, is added to the dispersion at an amount of 4 wt% to 60 wt% of the total weight to give a slurry, and the slurry is well stirred. Then, vinyl acetate emulsion or acrylic emulsion as organic binder and organic fiber such as pulp or rayon yarns are added to the slurry. Then, starch solution is added to this slurry to be agglutinated, and the slurry is placed in a forming die and dehydrated there to give a sheet. After being dried, the sheet is fired at about 600°C to incinerate the organic substances such as starch, and sintered at a temperature above 900°C to give a sintered ceramic fiber composite sheet to form the filter element. Preferable range of contents of the heat resistant ceramic fiber should be 40—96 wt%, preferable porosity of the sintered ceramic fiber composite sheet should be 70% or more, and mean diameters of the heat resistant ceramic fiber should be preferably 1—20 μm, in order to perform satisfactory characteristics as the exhaust gas filter element.

In general, when the filtrating surface area increases, the pressure drop and increasing rate of pressure drop decrease. Accordingly, the filtrating surface of the filter element of the present invention is selected as large as possible by means of the following manner of construction and method of making.

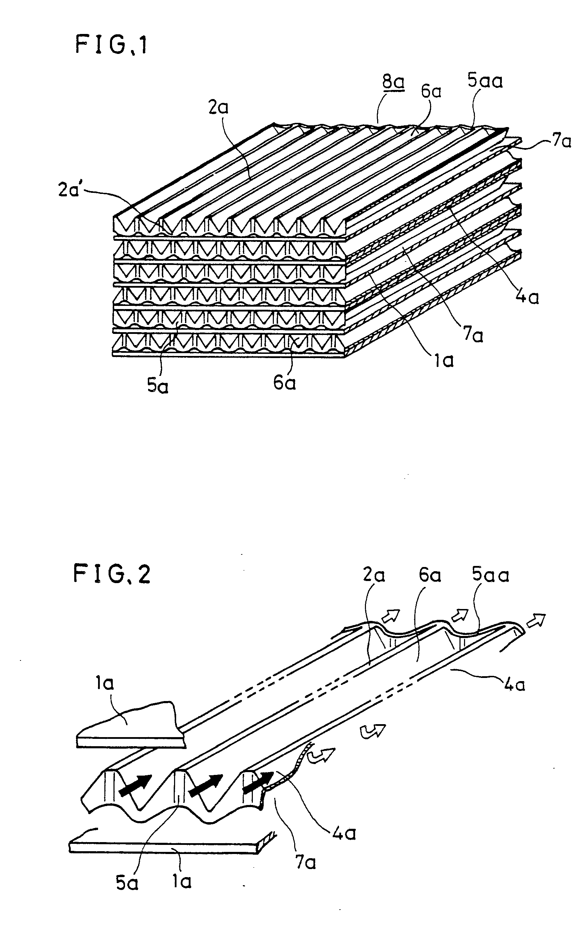

As shown in Figure 1, a honeycomb structure 8a is made by stacking and bonding plane sheets 1a and corrugated sheets 4a alternately in layers. The corrugations are preferably arranged parallelly. As shown in Figure 2, end parts of the corrugations at the front edge and the back edge of the corrugated sheet are pressed downwards and pressed upwards, respectively, to form blockade walls 5a and 5aa, thereby forming turned-down or turned-up end parts at alternate end parts of the channels 6a and 7a. Figure 2 shows detailed configuration and gas flows in relation with the channels 6a and 7a. In Figure 2, black arrows show flows of inflowing exhaust gas to be filtered, and the white arrows show flows of filtered and outgoing exhaust gas.

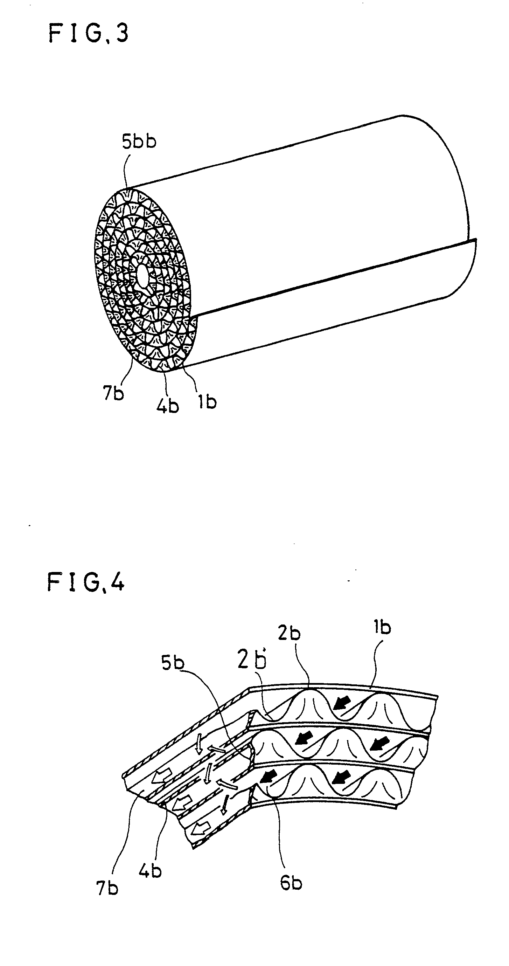

Figure 3 and Figure 4 show another example, wherein a belt-shaped plane sheet 1b and a belt-shaped corrugated sheet 4b are together rolled with corrugations in parallel to the axis thereof to form a rolled structure. Also in this example, end parts of the corrugations at the front edge and the back edge of the corrugated sheet are pressed downwards and pressed upwards, respectively, to form blockade walls 5b and 5bb, thereby forming turned down end parts or turned up ends parts at alternate end parts of the channels 6b and 7b, respectively. In Figure 4, black arrows show flows of inflowing exhaust gas to be filtered, and the white arrows show outgoing flows of filtered exhaust gas.

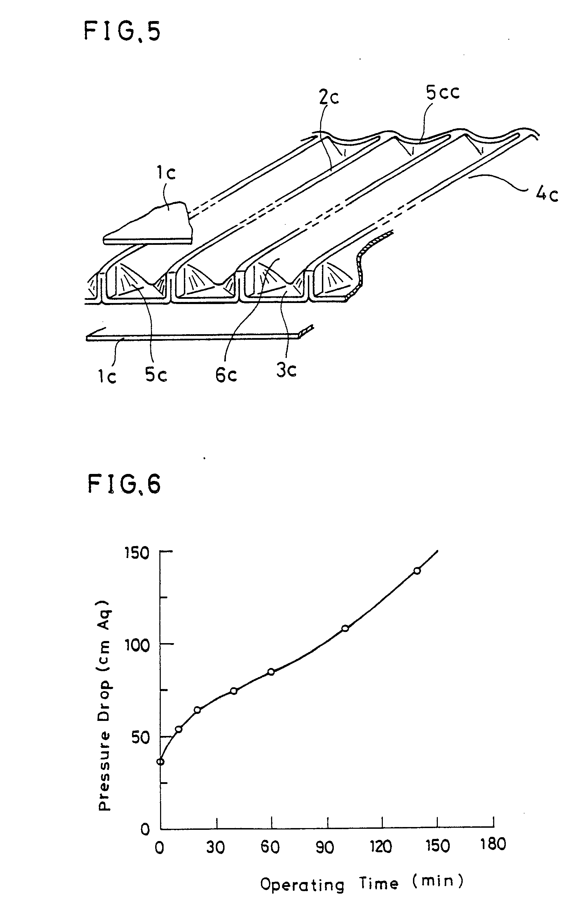

Figure 5 shows another modification, which is applicable both for the configuration shown in Figure 1 and Figure 2, and the rolled structure shown in Figure 3 and Figure 4. In this example, the blockade walls 5c and 5cc are configured in widemouthed shape 3c in order to decrease the pressure drop at the inlet part of the gas flow path 6c, and to prevent a blockade by means of particulates in the exhaust gas at the inlet end part of the gas flow path. End parts of the honeycomb structure may be protected by hardening them with impregnation of fire clay and subsequent firing, so that attrition caused by the exhaust gas flow at the end part is prevented.

The sintered ceramic fiber composite sheet in accordance with the present invention has such satisfactory characteristics that, with respect to the sheet of 1 mm thick, the pressure drop for room temperature air of 10 cm/sec flow through velocity is below 10 cm Aq (about 10 mbar); and its heat shock resistivity against repeated heat shocks of heating and cooling cycles of three minutes repetition period is more than 1000 times with 850°C temperature difference.

Since the sintered ceramic fiber composite sheets configured in honeycomb structure, have a large total area of filtering and a large porosity, the filtration is performed not only at the sheet surface but also inside the sheet. Therefore, the filter has a very low increasing rate of pressure drop.

Furthermore the filter element in accordance with the present invention has a characteristic of large freedom of selection of pressure drop, increasing rate of pressure drop and particulates collection efficiency, by varying the diameter of composite ceramic fibers, sizes of coarse particles and bulk density.

Example 1
1. Preparation of the filter element

560 g of ceramic fibers of alumina-silica composition having about 2 μm mean diameter $\overline{\phi}$ of fiber was cut into short yarns of 0.1 mm—10 mm lengths. Then the fiber was dispersed into about 50 l of water, and a small quantity of surface active agent was added thereto. Then, 120 g of silica-alumina fire clay prepared by blending equal amounts of ball clay and china clay and 70 g petalite was added to the dispersion and moderately stirred and blended to give an intimate admixture. Then, an aqueous solution of starch was added into the admixture of the ceramic fiber and the fire clay, to be agglutinated. And 40 g of vinyl acetate emulsion was added thereto at the same time. Then the admixture was poured into 500 l of water to be diluted to give a slurry. Then the slurry was put into a paper forming machine provided with 60 mesh filter screen, thereby to form a sheet of 2m² area and 1 mm thickness. The sheet was then dried in the air at 150°C for about 30 minutes to form ceramic fiber composite sheet.

2. Making of a filter element:

Then, plane sheets 1a of 120 mm width and 240 mm length was cut by using one third part of this composite sheet. And corrugated sheets 4a of substantially the same size as the plane sheet 1a and having corrugations of 4 mm pitch and 3 mm peak-to-peak heights were made by utilizing the remaining two third of the composite sheet, as shown in Figure 1 and Figure 2. Front end parts and back end parts of corrugations on the corrugated sheet 4a were pressed downwards and pressed upwards, respectively, to form blockade walls 5a at the front end and blockade walls 5aa at the back end, thereby forming turned down ends parts and turned up end parts at alternate end parts of the channels 6a and 7a, respectively. Then the corrugated sheet and the plane sheet were alternately stacked in layers, making tight contacts and bondings of peak ridges 2a and bottom ridges 2a' of the corrugations to the lower face of the upper plane sheet and to the upper face of the lower plane sheet, respectively, thereby forming 30 stages of stacking in layers. Thus, a honeycomb structure 8a having incoming channels 6a with blockage walls 5aa at the back end and outgoing channels 7a with blockade walls 5a at the front end were made. Then, the honeycomb structure 8a was sintered at 1200°C for one hour, thereby making a filter element of sintered ceramic fiber composite. The filter element manufactured in the above-mentioned process was mounted in a known tubular container with known appropriate shock absorber and packing to complete an exhaust gas filter.

Figure 6 is a graph showing characteristic of pressure drop (in cm Aq) (mbar respectively) measured by connecting the exhaust gas filter to an exhaust gas outlet of a diesel engine, which emitted exhaust gas containing about 0.1 g/m³ particulates, at a rate of 3.3 m³/min. In this example, the particulates collection efficiency was about 80%.

Example 2

In the same process as example 1, a ceramic fiber composite sheet of 2m² area and 1 mm thickness was prepared. Then, a belt-shaped plane sheet 1b of 120 mm width was cut by using one third part of the composite sheet. And a belt-shaped corrugated sheets 4b of substantially the same size as the plane sheet 1b and having corrugations of 4 mm pitch and 3 mm peak-to-peak heights were made, by using the remaining two third part, as shown in Figure 3 and Figure 4. Front end parts and back end parts of the corrugations on the corrugated sheet 4b were pressed downwards and pressed upwards, respectively, to form blockade walls 5b at the front end and blockade wall 5bb at the back end, thereby forming turned down end parts and turned up end parts at alternate end parts of the channels 6b and 7b, respectively. Then, as shown in Figure 4, the plane sheet 1b and the corrugated sheet 4b were together rolled to form a rolled structure with stacked layers, making tight contacts and bondings of peak ridges 2b and bottom ridges 2b' of the corrugations to the inner face of the outer plane sheet and to the outer face of the inner plane sheet, respectively. Thus a filter element with a rolled honeycomb structure as shown in Figure 3 and Figure 4, having incoming channels 6b and outgoing channels 7a with blockade walls 5b and 5bb at the front end and at the back end respectively were made. The rolled structure of ceramic fiber composite sheet was then sintered at 1200°C for one hour to form a filter element. The filter element was then mounted in a known tubular container with known appropriate shock absorber and packing to complete an exhaust gas filter.

The exhaust gas filter showed pressure drop characteristic substantially the same as that of Example 1. This honeycomb filter element of the rolled structure was easy to make and showed superior heat shock resistivity and shock resistivity.

Example 3

A plane sheet 1c and a corrugated sheet 4c with blockade walls 5c, 5cc were made in the same method as that of the example 1. At least the end part 6c of the inlet side of the corrugated sheet is pressed in a manner that the blockade walls 5c were formed to have widemouthed shape 3c, as shown in Figure 5. That is, the inlet part of at least the incoming channel 6c has tapered inlet gradually widened towards outside. The plane sheet 1c, 1c ... and corrugated sheets 4c, 4c ... were alternately stacked in layers, bonded peak ridge 2C of corrugation to the plane sheet and sintered for about one hour at 1200°C, to form a sintered ceramic fiber composite filter element.

The filter element was mounted in a known tubular container with known shock absorber and appropriate packing to complete an exhaust gas filter. The exhaust gas filter was connected to an exhaust gas outlet of a diesel engine, and the filter was tested in the same condition as that of the example 1. Initial pressure drop was below 10 cm Aq (about 10 mbar), and this value is very much satisfactory as an exhaust gas filter.

Example 4

Ceramic fiber of alumina-silica composition was cut into short yarns of 0.1 mm—10 mm lengths. Then the fiber was measured to 17, 20, 29, 39, 44, 47 and 48 weight parts and each of measured ceramic fiber was dispersed into respective 3000 weight parts of water together with rayon fiber, pulp and a small amount of surface active agent. On the other hand, ball clay of 19, 17, 12, 6, 3, 1 and 0.9 weight parts were measured, and mixed with petalite of about 100 μm diameter grain and measured into 13, 12, 8, 4, 2, 1 and 0.6 weight parts, respectively, and each of the mixtures was suspended in 500 weight parts of water, to prepare seven suspension were prepared. Then, the above-mentioned ceramic fiber dispersions and the above-mentioned fire clay suspensions were mixed under stirring. Thereafter starch solution was added to the mixture to agglutinate the fire clay to the ceramic fiber.

Then after adding six weight parts of vinyl acetate emulsion, the above admixtures were diluted by pouring into 30000 weight parts of water, respectively, to give seven slurries, which were then formed to sheets in common method by using belt type paper forming machine, thereby making belt shaped sheets of about 1 mm thickness. Parts of the resultant sheets were kept in electric furness and fired in air about 600°C for one hour, to burn out organic contents in the sheet materials. Thereafter, the sheets were kept at 1250°C in air for 1.5 hours, to make sintered ceramic fiber composite sheets. Bending strengths measured for the resultant seven samples of sintered ceramic fiber composite sheets are shown in the below mentioned Table 1.

TABLE 1
(Bending strength of ceramic composite sheets)

| Sample | Contents of ceramic fiber | | Bending strength | |
| --- | --- | --- | --- | --- |
| No. | Weight parts | Weight % | (Kg/cm²) | (mbar) about |
| 1 | 17 | 35 | 45 | 44,1 |
| 2 | 20 | 41 | 41 | 40,2 |
| 3 | 29 | 59 | 24 | 23,5 |
| 4 | 39 | 80 | 10 | 9,8 |
| 5 | 44 | 90 | 7 | 6,8 |
| 6 | 47 | 96 | 2 | 1,9 |
| 7 | 48 | 97 | 0,7 | 0,6 |

The resultant sheet was worked into corrugated sheet in the same manner as elucidated in example 2, to form corrugations of 4 mm pitch and 3 mm peak-to-peak height. And a plane sheet is bonded to the corrugated sheet to form a composite sheet like a corrugated card board. The composite sheet is rolled while bonding as shown in Figure 4, and the resultant rolled honeycomb structure has a whirlpool shaped section. Then the rolled honeycomb structure was fired in an electric furnace at about 600°C for one hour in air atmosphere, to burn out organic component in the sheet material. Thereafter it was sintered in an air atmosphere at about 1250°C for 1.5 hours. Thus a composite filter element was obtained.

As shown in Table 1, the bending strength decreases as the ceramic fiber component increases. By suitably selecting the pitch and heights of the corrugation in constructing the honeycomb-shaped element, the element acquired a considerable resistivity against pressure of the exhaust gas. However, when the ceramic fiber component exceeded 96 wt%, then bending strength became below 2 kg/cm², (about 1,9 bar), and it became difficult to make a honeycomb construction with sufficient strength.

On the other hand, when ceramic fiber component was below 40 wt%, the clay component was likely to fill the pores formed by the ceramic fibers, thereby undesirably increasing fluidic resistance against the exhaust gas, making the filter element liable to be choked. That is, while the filter element No. 3 of Table 1 with 59 wt% of ceramic fiber has initial pressure drop of 25 cm Aq (about 25 mbar), the filter element No. 1 with 35 wt% ceramic fiber has initial pressure drop of 41.5 cm Aq (about 41,5 mbar) which performs filtration mechanism of only cake filtration.

Example 5

29 weight parts of ceramic fiber of alumina-silica composition having about 3 μm mean diameter $\overline{\phi}$ of fiber was measured and cut into short yarns of 0.1 mm—10 mm length. Then the fiber was dispersed into 3000 weight parts of water added by rayon fiber, pulp and a small amount of surface active agent. On the other hand, 12 weight parts of ball clay containing sericite clay mixed thereto was measured and suspended in 500 weight parts of water, and then 4 weight parts of petalite of about 100 μm diameter was mixed to the suspension. Then after blending the ceramic fiber dispersion and the clay suspension under stirring, a starch solution was added to agglutinate the clay. And subsequently, appropriate quantities of acrylic emulsion and polyvinyl alcohol were added to the above-mixture, and the mixture was poured into 30000 weight parts of water to be diluted to give a slurry. Then the slurry was put into a belt-type paper forming machine provided with 60 mesh filter screen, thereby to form a belt-type sheet of 1 mm thickness. The sheet was then dried in 150°C air for 30 minutes to form a ceramic fiber composite sheet.

In the similar manner as in the Example 2 and Example 4, a rolled type honeycomb structure was formed and sintered to make a filter element. It was found that when petalite of large diameter was added in the papering process, time required for dehydration and drying can be shortened. The filter element was mounted in a known tubular container with known shock absorber and appropriate packing to complete an exhaust gas filter. And the below-mentioned table 2 shows initial pressure drop and increase of pressure drop after running for 20 minutes, when the exhaust gas filter was connected to the exhaust pipe of a diesel engine emitting exhaust gas containing about 0.1 g/m$^3$ particulates at a rate of 3.3 m$^3$/min. A measured data of a reference filter element which does not contain the petalite powder is also shown for comparison.

TABLE 2
(Characteristics of filter elements)

| | Filter element of example 5 | Filter element for comparison |
|---|---|---|
| Initial pressure drop [cm Aq] (mbar) | 15 (about 15) | 31 (about 31) |
| Increase of pressure drop [cm Aq] (mbar) | 26 (about 26) | 66 (about 66) |
| Particulates collection efficiency [%] | 94 | 97 |

As can be observed in Table 2, making of filter element with small initial pressure drop and small increasing rate of pressure drop is possible by means of mixing powder or grain of a large diameter.

When section of the filter element after the above-mentioned running test was examined by means of scanning electron microscopy, the particulates were diffused to the depth of 200 μm—500 μm, that is, clarification filtration was very effectively done in case of the filter element of the present invention. And it is supposed that, by means of this clarification filtration, the increase of pressure drop was eased in the embodiments of the present invention. That is, it is supposed that as a result of mixing large diameter coarse particles, pores between the fibers were widened, thereby permitting deep intrusions of particulates into the sheet. This is supposed as the reason to decrease the initial pressure drop and the increasing rate of pressure drop.

Example 6

Ceramic fibers of alumina-silica composition of mean fiber diameters $\overline{\phi}$ of about 1 μm, 3 μm, 6 μm, 10 μm and 20 μm were respectively measured by 29 weight parts, and cut by a chopper into fiber length of 0.1—10 mm. The above-mentioned five samples of chopped fibers were respectively mixed with pulp and a small amount of surface active agent, and five resultant mixtures were dispersed respectively in 3000 weight parts of water to give five dispersions. On the other hand, 35 weight parts of china clay added with selicite and talc mixed thereto was prepared and dispersed into 2500 weight parts of water to give a suspension, which was then equally divided into five ones. Next, the above-mentioned five dispersions of ceramic fibers and respective one of equally divided clay suspensions were mixed under stirring, respectively. Each mixture was further divided into 5 samples of volume ratio of 1:2:4:6:8 thereby producing 25 samples. Then, methyl-cellulose solution and starch solution were added into the 25 samples, thereby to agglutinate fiber and clay. After adding vinyl acetate emulsion and polyvinyl alcohol, the 25 samples were diluted respectively by 30000 weight parts of water. Then the 25 solutions were placed in paper forming machines and formed into sheets in common method, thereby giving 25 kinds of sheets of different thickness and substantially uniform size.

The obtained sheet was pressed under heating by water vapor at about 150°C—200°C to give sheets of 2 mm thickness. Thereafter by forming and sintering in the same way as that of Example 2, a filter element of Figure 4 was completed.

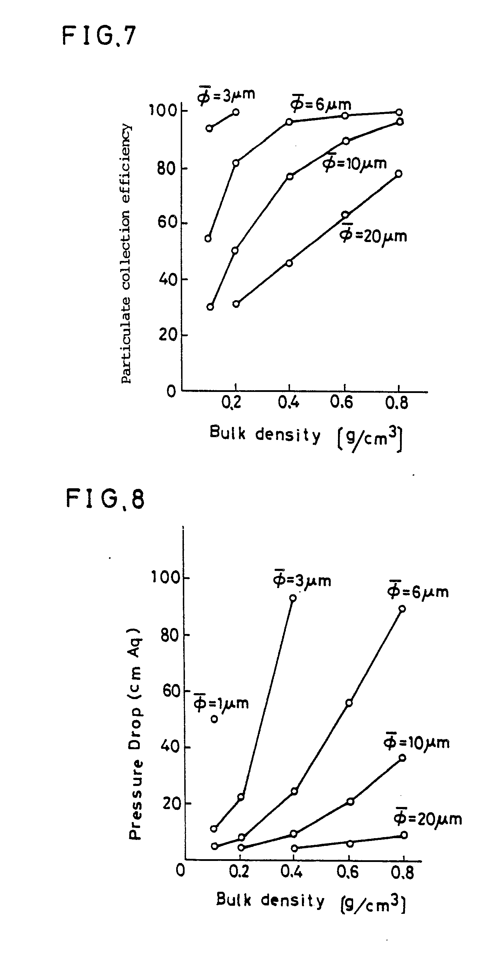

Further, samples were cut off of the above-mentioned sheets, and sintered as they are in plain sheets to give sintered ceramic fiber composite sheets. Their bulk densities and pressure drops were measured, and further, particulates collection efficiency for particulates of about 0.3 μm diameter was measured. The measured results are shown in Figure 7 and Figure 8.

The bulk density of the resultant sintered ceramic fiber composite sheets were 0.1—0.8 g/cm³, and this value is corresponding to above 70% porosity.

Accordingly, by suitably selecting the diameters of ceramic fibers and the bulk densities of the composite sheet, the initial pressure drop and particulates collection efficiency can be controlled within a wide range, as can be observed from Figure 7 and Figure 8.

## Claims

1. An exhaust gas filter for filtering particulates comprising a row of a plural number of channels (6a, 7a; 6b, 7b) and blockade walls (5a, 5aa; 5b, 5bb; 5c, 5cc) provided to close alternate ends of said channels (6a, 7a; 6b, 7b), thereby to close one end of each channel (6a, 7a; 6b, 7b) characterized in that said channels (6a, 7a; 6b, 7b) are defined by a pair of plane or concentric sheets (1a; 1b) bonded together through ridges of corrugations of corrugated sheets (4a; 4b) of sintered ceramic fibre composite material and that said sintered ceramic fibre composite material contains from 40 wt.% to 96 wt.% heat-resistant ceramic fibre.

2. An exhaust gas filter according to claim 1, characterized in that said ceramic fibre composite sheet comprises heat-resistant ceramic fibre having mean diameter of from 1 μm to 20 μm.

3. An exhaust gas filter according to claim 1 or 2, characterized in that said blockade walls (5a, 5aa; 5b, 5bb; 5c, 5cc) are end parts of said corrugations which are pressed downwards at one end and upwards at the other end.

4. An exhaust gas filter according to one of claims 1 through 3, cahracterized in that ends of said channels (6a, 7a; 6b, 7b) open at said inlet side are wide-mouthed shape.

5. Method of making exhaust gas filter according to any of the claims 1 through 4 comprising the following steps:

(a) chopping heat-resistant ceramic fibres into 0.1 to 1.0 mm length and mixing them with water suspension of fire clay to make a slurry,

(b) forming sheets of said slurry by a paper-forming method,

(c) stacking at least two plane sheets and at least one corrugated sheet, thereby forming a plural number of parallel channels, closing end parts of alternate channels in a manner that only one end of each channel being closed leaving the other end open, and

(d) sintering the assembly in air.

6. Method of making exhaust gas filter according to claim 5, characterized in that said plane sheets and said corrugated sheet are formed belt-like, and said plane sheet and said corrugated sheet are rolled together to form rolled honeycomb structure.

7. Method of making exhaust gas filter according to claim 5 or 6, characterized by blending an organic high molecular binder into said slurry after agglutination of said heat-resistant ceramic fibre and said fire clay, and hot-pressing said sheet to form said plane sheets and corrugated sheet.

## Patentansprüche

1. Abgasfilter zum Filtern von Feststoffen, enthaltend eine Reihe von einer Mehrzahl von Kanälen (6a, 7a; 6b, 7b) und Sperrwänden (5a, 5aa; 5b, 5bb; 5c, 5cc) zum Verschließen alternierender Enden der Kanäle (6a, 7a; 6b, 7b), um dadurch ein Ende jedes Kanals (6a, 7a; 6b, 7b) zu schließen, dadurch gekennzeichnet, daß die Kanäle (6a, 7a; 6b, 7b) von einem Paar ebener oder konzentrischer dünner Platten (1a; 1b) begrenzt sind, die aneinander durch Rippen (von) oder Riffeln von gewellten dünnen Platten (4a; 4b) aus gesintertem keramischen Faser-Verbundmaterial miteinander verbunden sind und daß das gesinterte keramische Faser-Verbundmaterial von 40 bis 96 Gew.-% wärmebeständige keramische Faser enthält.

2. Abgasfilter nach Anspruch 1, dadurch gekennzeichnet, daß die keramische Faser-Verbundplatte wärmebeständige keramische Faser mit einem mittleren Durchmesser von 1 μm bis 20 μm enthält.

3. Abgasfilter nach Anspruch 1 oder 2, dadurch gekennzeichnet, daß die Sperrwände (5a, 5aa; 5b, 5bb; 5c, 5cc) Endteile der Riffeln sind, die an einem Ende abwärts und an dem anderen Ende aufwärts gepreßt sind.

4. Abgasfilter nach einem der Ansprüche 1 bis 3, dadurch gekennzeichnet, daß Enden der Kanäle (6a, 7a; 6b, 7b), die an der Einlaßseite offen sind, von weit geöffneter Konfiguration sind.

5. Verfahren zur Herstellung eines Abgasfilters nach einem der Ansprüche 1 bis 4, enthaltend die folgenden Stufen:

(a) Zerhacken von wärmebeständigen keramischen Fasern zu einer Länge von 0,1 bis 1,0 mm und ihr Mischen mit einer Wassersuspension von hochfeuerfestem Ton zur Herstellung eines Schlickers,

(b) Formen von dünnen Platten aus dem Schlicker mittels eines Papierherstellungsverfahrens,

(c) Aufeinanderschichten von wenigstens zwei flachen Platten und wenigestens einer gewellten Platte, um dadurch eine Mehrzahl von parallelen Kanälen zu bilden, Abschließen von Endteilen von alternierenden Kanälen auf eine Weise, daß nur ein Ende jedes Kanals geschlossen ist, während das andere Ende offen bleibt, und

(d) Sintern der gesamten Zusammenstellung in Luft.

6. Verfahren zur Herstellung eines Abgasfilters nach Anspruch 5, dadurch gekennzeichnet, daß die ebenen dünnen Platten und die gewellte dünne Platte gürtelartig geformt sind und daß die ebene Platte und die geriffelte Platte zur Bildung einer Bienenwabenstruktur zusammengerollt sind.

7. Verfahren zur Herstellung eines Abgasfilters nach Anspruch 5 oder 6, dadurch gekennzeichnet, daß man ein organisches hochmolekulares Bindemittel in den Schlicker mischt nach Verkleistern der wärmebeständigen keramischen Faser und des hochfeuerfesten Tons, und daß man die dünne Platte zur Bildung der ebenen Platten und der geriffelten Platte warmpreßt.

**Revendications**

1. Filtre de gaz d'échappement destiné au filtrage de particules, comprenant une rangée de plusieurs canaux (6a, 7a; 6b, 7b) et de parois de blocage (5a, 5aa; 5b, 5bb; 5c, 5cc) servant à obstruer des extrémités alternées des canaux (6a, 7a; 6b, 7b), d'où la fermeture d'une extrémité de chaque canal (6a, 7a; 6b, 7b), caractérisé en ce que les canaux (6a, 7a; 6b, 7b) sont définis par une paire de feuilles planes ou concentriques (1a; 1b) liées ensemble par l'intermédiaire des nervures des ondulations de feuilles ondulées (4a; 4b) en matériau composite à fibre de céramique frittée et en ce que le matériau composite en fibre céramique frittée contient de 40% en poids à 96% en poids de fibre céramique résistant à la chaleur.

2. Filtre de gaz d'échappement selon la revendication 1, caractérisé en ce que la feuille en composite de fibre céramique comprend une fibre céramique résistant à la chaleur ayant un diamètre moyen allant de 1 μm à 20 μm.

3. Filtre de gaz d'échappement selon la revendication 1, ou la revendication 2, caractérisé en ce que les parois de blocage (5a; 5aa; 5b, 5bb; 5c, 5cc) sont des parties extrêmes des ondulations qui sont comprimées vers le bas à une extrémité et vers le haut à l'autre extrémite.

4. Filtre de gaz échappement selon l'une quelconque des revendications 1 à 3, caractérisé en ce que les extrémités des canaux (6a, 7a; 6b, 7b) ouvertes du côté admission ont la forme d'un large goulot.

5. Procédé de fabrication d'un filtre de gaz d'échappement selon l'une quelconque des revendications 1 à 4, caractérisé en ce qu'il consiste à:

(a) hâcher les fibres céramiques résistant à la chaleur en tronçons de 0,1 à 1,0 mm de long et à les mélanger avec une suspension dans l'eau d'argile réfractaire pour fabriquer une bouillie,

(b) former des feuilles avec la bouillie par un procédé de fabrication du papier,

(c) empiler au moins deux feuilles planes et au moins une feuille ondulée, d'où la formation de plusieurs canaux parallèles; fermer les parties extrêmes de canaux alternés de manière que seule une extrémité de chaque canal soit fermée, laissant l'autre extrémité ouverte; et

(b) fritter l'ensemble dans l'air.

6. Procédé de fabrication d'un filtre de gaz d'échappement selon la revendication 5, caractérisé en ce que les feuilles planes et la feuille ondulée ont la forme d'une bande, et la feuille plane et la feuille ondulée sont roulées ensemble pour constituer une structure roulée en nid d'abeille.

7. Procédé de fabrication d'un filtre de gaz d'échappement selon la revendication 5 ou la revendication 6, caractérisé par le mélange d'un liant organique de poids moléculaire élevé dans la bouillie après agglutination de la fibre céramique résistant à la chaleur et de l'argile réfractaire, et par la compression à chaud de la feuille afin de former les feuilles planes et la feuille ondulée.

FIG.1

FIG.2

## FIG.3

5bb

7b    4b    1b

## FIG.4

2b    1b

5b    2b

7b    4b    6b

# FIG.5

# FIG.6

FIG.7

FIG.8